Europäisches Patentamt

European Patent Office

Office européen des brevets

(11) Veröffentlichungsnummer: **0 025 821**
**A1**

(12) **EUROPÄISCHE PATENTANMELDUNG**

(21) Anmeldenummer: **80103468.7**

(22) Anmeldetag: **21.06.80**

(51) Int. Cl.³: **G 02 F 1/00**
**G 02 F 1/13, F 21 V 11/02**

(30) Priorität: **20.09.79 DE 2937974**

(43) Veröffentlichungstag der Anmeldung:
**01.04.81 Patentblatt 81/13**

(84) Benannte Vertragsstaaten:
**CH FR GB IT LI NL**

(71) Anmelder: **Licentia Patent-Verwaltungs-GmbH
Theodor-Stern-Kai 1
D-6000 Frankfurt/Main 70(DE)**

(72) Erfinder: **Burgeth, Heinz
Orsteil Sollenberg
D-8554 Gräfenberg(DE)**

(72) Erfinder: **Schiekel, Manfred, Dipl.-Phys.
Söflinger Strasse 76
D-7900 Ulm(DE)**

(72) Erfinder: **Tessendorf, Günter
Egilolfstrasse 74a
D-8551 Egloffstein(DE)**

(74) Vertreter: **Langer, Karl-Heinz, Dipl.-Ing. et al,
Licentia Patent-Verwaltungs-GmbH Theodor-Stern-Kai
1
D-6000 Frankfurt/Main 70(DE)**

(54) **Vorrichtung zur elektrooptischen Steuerung eines Lichtbündels.**

(57) Für Flüssigkristallzellen (9) wird ein Lamellenfilter (10) vorgeschlagen, bei dem die Zwischenräume zwischen den Lamellen (11) mit einem Material (12) ausgefüllt sind, das als wellenlängenselektives Filter wirkt.

FIG.1

EP 0 025 821 A1

Licentia Patent-Verwaltungs-GmbH
Theodor-Stern-Kai 1
6000 Frankfurt (Main) 70

Ulm,19.09.79
SE2-UL/Am/deu
UL 79/82

Vorrichtung zur elektrooptischen
Steuerung eines Lichtbündels

Die vorliegende Erfindung betrifft eine zwischen einem
Betrachter und einer Lichtquelle angeordnete Vorrichtung
zur elektrooptischen Steuerung eines von einer Lichtquelle ausgehenden Lichtbündels und einer benachbart zu dieser Vorrichtung angeordneten Filteranordnung mit einem
eine Vielzahl von zueinander parallelen lichtundurchlässigen Lamellen aufweisenden Jalousiefilter und einem wellenlängenselektiven Filter.

Eine Flüssigkristallanordnung mit einem Jalousiefilter ist
z.B. aus der DE-OS 20 42 180 bekannt.

Zur Erzielung von Farbeffekten oder zur Vermeidung von
auf eine Flüssigkristallzelle einwirkenden Strahlungen
wie z.B. UV Strahl n, ist es erwünscht, benachbart zu

...

solchen Flüssigkristallvorrichtungen wellenlängenselektive Filter vorzusehen.

Der vorliegenden Erfindung liegt die Aufgabe zugrunde, eine einfache herstellbare und gegen Erschütterungen unempfindliche Filteranordnung insbesondere für Flüssigkristallanzeigevorrichtungen anzugeben.

Gemäß der Erfindung wird vorgeschlagen, daß das wellenlängenselektive Filter aus einer erhärteten Vergußmasse besteht die zumindest die Zwischenräume zwischen den Lamellen des Jalousiefilters ausfüllt.

Die beschriebene Vorrichtung ist einfach herstellbar und verhältnismäßig robust. Sie eignet sich daher bevorzugt für Anzeigevorrichtungen die rauhen Bedingungen ausgesetzt wird, z.B. Anzeigen für Kraftfahrzeuge, Haushaltsgeräte und dergleichen.

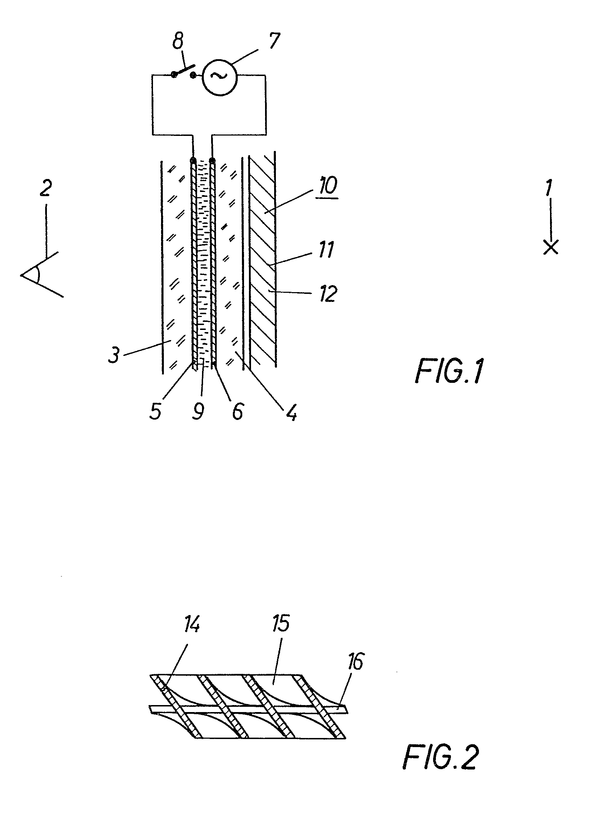

Anhand der in den Figuren 1 und 2 dargestellten Ausführungsbeispiele wird die Erfindung nachfolgend näher erläutert.

Die Figur 1 zeigt schematisch einen Querschnitt durch eine erfindungsgemäße Vorrichtung und die Figur 2 einen Ausschnitt aus einem erfindungsgemäßen Kombinationsfilter.

Die elektrooptische Steuerquelle ist in Figur 1 eine Flüssigkristallzelle die im Durchsicht betrieben wird. Die Flüssigkristallzelle besteht in bekannter Weise aus zwei transparenten Scheiben 3 und 4, z.B. aus Glas, zwischen welchen sich die Flüssigkristallschicht 9 befindet. Um

...

die Schicht 9 für von der Lichtquelle 1 zum Beobachter 2 gerichtete Strahlen mehr oder weniger, zumindest in Teilbereichen bezüglich der Lichtdurchlässigkeit steuern zu können, befinden sich an den Innenflächen der Scheiben 3 und 4 elektrisch leitende Elektroden 5 und 6. Bei Anlegen einer Spannung 7 durch Schließen des Schalters 8 wird zum Beispiel die Flüssigkristallschicht 9 weniger lichtdurchlässig und reduziert die für den Betrachter 2 sichtbare Lichtmenge.

Damit der Betrachter 2 bei hellgesteuerter Zelle die Lichtquelle 1 nicht direkt sieht, ist ein Jalousiefilter 10 benachbart zur Flüssigkristallzelle angeordnet, das parallel zueinander verlaufende, schräg gestellte undurchsichtige Lamellen 11 aufweist. Zur Erzielung von Farbfiltereffekten und/oder zurFilterung von UV-Strahlen sind die Zwischenräume zwischen den Lamellen 11 mit einer Filtermasse 12 ausgefüllt. Diese besteht z. B. aus einem entsprechend eingefärbten Acrylglas.

Gemäß einem bevorzugten Ausführungsbeispiel nach FIG. 2 besteht das Jalousiefilter aus einem einstückigen Formteil 13 aus Blech oder Kunststoff, das entsprechend gestanzt und gebogen ist. In den Zwischenräumen zwischen den Lamellen 14 befindet sich das Filtermaterial 15. Mit 16 sind die seitlichen Stege des Jalousiefilters bezeichnet.

Gemäß einem weiteren bevorzugten Ausführungsbeispiel sind die Lamellen in die scheibenförmige Filtermasse eingegossen. Die Filtermasse bildet eine Scheibe, die nur einen Teil des auftreffenden Lichtes hindurchläßt.

0025821

- 4 -

Licentia Patent-Verwaltungs-GmbH
6000 Frankfurt (Main) 70

Ulm, 19.09.79
SE2-UL/Am/deu
UL 79/82

Patentansprüche

1. Zwischen einem Betrachter und einer Lichtquelle angeordnete Vorrichtung zur elektrooptischen Steuerung eines
von einer Lichtquelle ausgehenden Lichtbündels und einer
benachbart zu dieser Vorrichtung angeordneten Filteranordnung mit einem eine Vielzahl von zueinander parallelen
lichtundurchlässigen Lamellen aufweisenden Jalousiefilter
und einem wellenlängenselektiven Filter, dadurch gekennzeichnet, daß das wellenlängenselektive Filter aus einer
erhärteten Vergußmasse besteht die zumindest die Zwischenräume zwischen den Lamellen des Jalousiefilters ausfüllt.

2. Vorrichtung nach Anspruch 1, dadurch gekennzeichnet,
daß das Jalousiefilter als einstückiges Formteil mit Lamellen und diese verbindenden Stegen ausgebildet ist.

...

3. Vorrichtung nach Anspruch 1, dadurch gekennzeichnet, daß zumindest die Lamellen des Jalousiefilters als Formteile ausgebildet sind.

4. Vorrichtung nach Anspruch 2 oder 3, dadurch gekennzeichnet, daß das (die) Formteil(e) als Stanzteil(e) ausgebildet ist (sind).

5. Vorrichtung nach einem der Ansprüche 1 bis 4, dadurch gekennzeichnet, daß die das wellenlängenselektive Filtermaterial bildende Vergußmasse an den Lamellen klebend haftet.

6. Vorrichtung nach einem der Ansprüche 2 bis 5, dadurch gekennzeichnet, daß das (die) Formteil(e) aus Blech oder Kunststoff besteht(en).

0025821

1/1

FIG.1

FIG.2

Europäisches Patentamt

**EUROPÄISCHER RECHERCHENBERICHT**

Nummer der ...

EP 80103468.7

| EINSCHLÄGIGE DOKUMENTE | | | KLASSIFIKATION DER ANMELDUNG (Int. Cl.) |
|---|---|---|---|
| Kategorie | Kennzeichnung des Dokuments mit Angabe, soweit erforderlich, der maßgeblichen Teile | betrifft Anspruch | |
| A | <u>CH - A - 555 578</u> (SIEMENS-ALBIS) <br> + Fig. 1; Spalte 2, Zeilen 24-63 + <br> -- | | G 02 F 1/00 <br> G 02 F 1/13 <br> F 21 V 11/02 |
| | <u>US - A - 3 753 822</u> (LASER OPTICS) <br> + Fig. 1,2; Spalte 3, Zeile 64 bis Spalte 4, Zeile 42; Spalte 6, Zeile 61 bis Spalte 7, Zeile 13 + <br> -- | 1,5 | |
| D,A | <u>DE - B - 2 042 180</u> (RCA) <br> + Fig. 2; Spalte 4, Zeilen 14-20 + <br> -- | 1,5 | **RECHERCHIERTE SACHGEBIETE (Int. Cl.)** <br><br> G 02 F 1/00 <br> G 02 B 5/00 <br> G 09 F 9/00 <br> E 06 B 9/00 <br> F 21 V 9/00 <br> F 21 V 11/00 <br> F 21 V 13/00 <br> H 01 J 29/00 <br> H 04 N 5/00 <br> B 61 D 27/00 <br> A 61 N 5/00 |
| | <u>GB - A - 185 834</u> (GEORGE CHAPELL) <br> + Fig. 1-3; Seite 1, Zeilen 57-83; Seite 2, Zeilen 39-44, 54-66 + <br> -- | 2-4,6 | |
| | <u>AT - B - 317 506</u> (HERBERT DERTNIG) <br> + Fig. 1; Seite 2, Zeilen 51-53 + <br> -- | 3,4 | |
| | <u>DE - A - 2 121 657</u> (NITZ) <br> + Seite 1, letzte Zeile - Seite 2, Zeile 3 + <br> -- | 6 | **KATEGORIE DER GENANNTEN DOKUMENTE** <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |
| | <u>DE - A - 1 509 160</u> (ALUMINIUM-WALZWERKE) <br> + Seite 1, Zeilen 15,16 + <br> ---- | 6 | |

| X | Der vorliegende Recherchenbericht wurde für alle Patentansprüche erstellt | |
|---|---|---|
| Recherchenort <br> WIEN | Abschlußdatum der Recherche <br> 24-11-1980 | Prüfer <br> BENISCHKA |

EPA form 1503.1   06 78

BAD ORIGINAL